## Europäisches Patentamt
## European Patent Office
## Office européen des brevets

(19)

(11) Veröffentlichungsnummer: **0 114 972**
**B1**

(12) **EUROPÄISCHE PATENTSCHRIFT**

(45) Veröffentlichungstag der Patentschrift:
18.05.88

(51) Int. Cl.⁴: **G 01 B 3/00**

(21) Anmeldenummer: 83111911.0

(22) Anmeldetag: 29.11.83

(54) Längenmesseinrichtung.

(30) Priorität: 27.01.83 DE 3302643

(43) Veröffentlichungstag der Anmeldung:
08.08.84 Patentblatt 84/32

(45) Bekanntmachung des Hinweises auf die Patenterteilung:
18.05.88 Patentblatt 88/20

(84) Benannte Vertragsstaaten:
AT CH DE FR GB IT LI NL SE

(56) Entgegenhaltungen:
DE-A-3 006 384
DE-C-2 505 585
DE-C-2 630 880
DE-C-2 712 422

(73) Patentinhaber: Dr. Johannes Heidenhain GmbH,
Nansenstrasse 17, D-8225 Traunreut (DE)

(72) Erfinder: Nelle, Günther, Dr. Ing., Eichenweg 12,
D-8221 Bergen (DE)

## Beschreibung

Die Erfindung betrifft eine Längenmeßeinrichtung gemäß dem Oberbegriff des Anspruchs 1.

In der DE-PS-2 712 422 ist eine Längenmeßeinrichtung beschrieben, bei der das Gehäuse für den Maßstab und die Abtasteinheit mittels Schrauben an einem Maschinenteil befestigt ist.

Der DE-PS-2 505 585 entnimmt man eine Längenmeßeinrichtung, bei der das Gehäuse für den Maßstab und die Abtasteinheit an beiden Enden an einem Maschinenteil mittels Winkelteile befestigt ist, die im Scheitelbereich ein Gelenk in Form einer Nut aufweisen.

Die DE-PS-2 630 880 offenbart eine Längenmeßeinrichtung, bei der das Gehäuse für den Maßstab und die Abtasteinheit an beiden Enden über Kugelgelenke an einem zu messenden Objekt befestigt ist.

Bei den bekannten Lösungen müssen zur Befestigung des Gehäuses am zu messenden Objekt paßgenaue Bohrungen sowohl im Gehäuse als auch im Objekt vorgesehen sein, die aufwendig in der Herstellung sind.

Aus der Druckschrift "Messen und Prüfen/Automatik", Juli/August 1974, Seite 438, Bild 12a ist es bekannt, einen Maßstabträger einseitig auf einer schmalen Auflagefläche eines Maschinenteils durch Spannpratzen zu befestigen. Bei dieser Anordnung sind hohe Andruckkräfte der Spannpratzen erforderlich, um den Maßstabträger bei Schwingungen und Erschütterungen der Maschine in Anlage an der Auflagefläche zu halten.

Der DE-OS-3 008 384 entnimmt man eine Meßeinrichtung, bei der ein Maßstabträger an beiden Seitenflächen je eine Nut aufweist, in die Spannpratzen zur Befestigung des Maßstabträgers an einem Maschinenteil eingreifen. Diese Anordnung erlaubt zwar eine sichere Anlage des Maßstabträgers am Maschinenteil, ist aber konstruktiv aufwendig und hat einen großen Raumbedarf.

Der Erfindung liegt die Aufgabe zugrunde, bei einer Längenmeßeinrichtung der oben erwähnten Gattung eine einfachere Befestigung eines Trägers für eine Maßverkörperung anzugeben.

Diese Aufgabe wird erfindungsgemäß durch die kennzeichnenden Merkmale des Anspruchs 1 gelöst.

Die mit der Erfindung erzielten Vorteile bestehen insbesondere darin, daß zur sicheren Befestigung des Trägers für die Maßverkörperung am zu messenden Objekt nur eine seitliche Nut erforderlich ist, so daß die Anzahl der benötigten Spannpratzen erheblich gesenkt werden kann. Dadurch ergibt sich eine einfacher aufgebaute und kostengünstigere Meßeinrichtung, die wegen ihres geringeren Raumbedarfs flexibler einsetzbar ist. Die Spannpratze erfüllt in besonders vorteilhafter Weise gleichzeitig die Funktionen eines Befestigungselements und eines Anschlagelements für den Träger der Maßverkörperung.

Vorteilhafte Weiterbildungen der Erfindung entnimmt man den Unteransprüchen.

Ein Ausführungsbeispiel der Erfindung wird anhand der Zeichnung näher erläutert.

Es zeigen

Figur 1a, b einen Querschnitt und eine Seitenansicht einer gekapselten Längenmeßeinrichtung mit Merkmalen der Erfindung und

Figur 2 einen vergrößerten Ausschnitt eines Schnitts AB der Figur 1b.

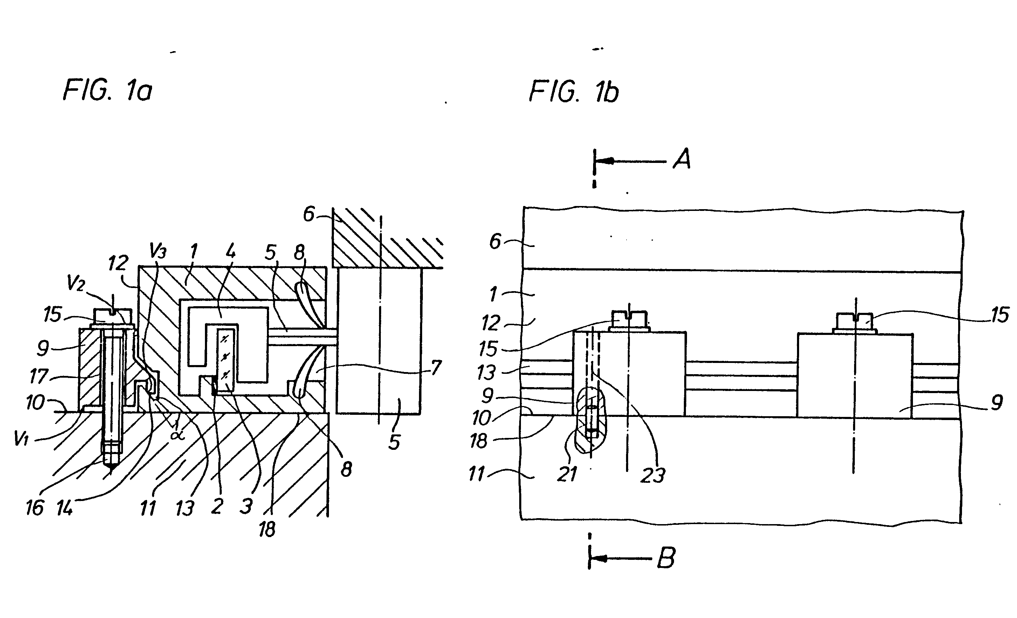

In Figur 1a, b ist in einem Querschnitt und in einer Seitenansicht eine gekapselte Längenmeßeinrichtung mit einem Gehäuse 1 in Form eines vorzugsweise stranggepreßten Hohlprofils aus Aluminium gezeigt, in dessen Inneren mittels einer Klebeschicht 2 ein Maßstab 3 befestigt ist, dessen Teilung von einer Abtasteinheit 4 in bekannter Weise zur Messung der Relativlage zweier Objekte abgetastet wird. Die Abtasteinheit 4 ist mittels eines Mitnehmers 5 mit einem der zu messenden Objekte in Form eines Schlittens 6 einer nicht dargestellten Bearbeitungsmaschine verbunden; der in Längserstreckung des Hohlprofils 1 verlaufende Durchlaßschlitz 7 für den Mitnehmer 5 ist durch dachförmig geneigte Dichtlippen 8 zur Abschirmung gegen Verunreinigungen verschlossen, durch die der Mitnehmer 5 hindurchgreift.

Das Hohlprofil 1 ist mittels wenigstens einer Spannpratze 9 auf einer Montagefläche 10 des anderen zu messenden Objekts in Form des Betts 11 der Bearbeitungsmaschine befestigt. Zu diesem Zweck weist das Hohlprofil 1 in einer zur Montagefläche 10 des Betts 11 senkrechten Seitenfläche 12 eine Nut 13 auf, die vorzugsweise über die gesamte Länge des Hohlprofils 1 verläuft und in die die Spannpratze 9 eingreift.

Erfindungsgemäß sind die Nut 13 und die Spannpratze 9 so ausgebildet, daß die Andruckkraft K der Spannpratze 9 für das Gehäuse 1 an die Montagefläche 10 in zwei zueinander senkrechte Kraftkomponenten $K_1$, $K_2$ in einer zur Längserstreckung des Gehäuses 1 senkrechten Ebene zerlegbar ist. Dazu ist die der Montagefläche 10 benachbarte Innenfläche 14 der Nut 13 zur Kontaktierung der Spannpratze 9 bevorzugt in einem Winkel $\alpha = 45°$ gegen die Montagefläche 10 des Betts 11 geneigt; dieser Winkeln $\alpha$ liegt in einem Bereich kleiner 90° und ist der Spannpratze 9 abgewandt.

Die Spannpratze 9 ist mittels einer Schraube 15 in einer Gewindebohrung 16 auf der Montagefläche 10 des Betts 11 befestigt und stützt sich mit einem Vorsprung $V_1$ auf der Montagefläche 10, mit einem Vorsprung $V_2$ an der zur Montagefläche 10 senkrechten Seitenfläche 12 des Hohlprofils 1 und mit einem Vorsprung $V_3$ an der Innenfläche 14 der Nut 13 ab, wobei sich die Nut 13 zwischen dem Vorsprung $V_2$ und der Montagefläche 10 und die Schraube 15 zwischen dem Vorsprung $V_1$ und der

Seitenfläche 12 befinden.

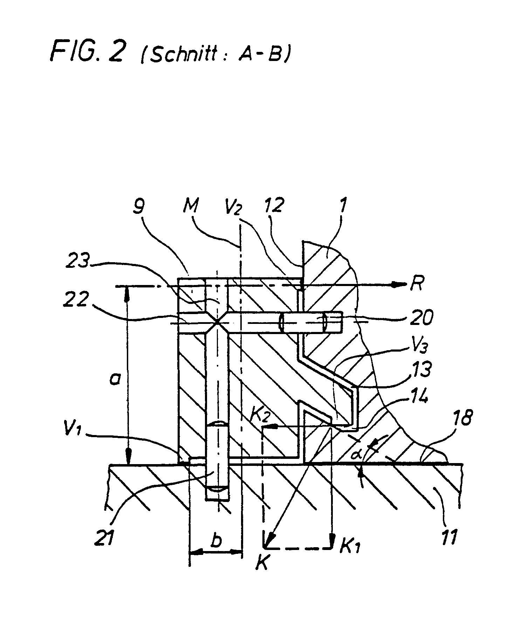

Die vom Vorsprung $V_3$ der Spannpratze 9 auf die Innenfläche 14 der Nut 13 ausgeübte Kraft K ist gemäß Figur 2 somit in eine senkrecht auf die Montagefläche 10 hingerichtete Kraftkomponente $K_1$ und in eine parallel zur Montagefläche 10 auf die Spannpratze 9 hingerichtete Kraftkomponente $K_2$ zerlegbar. Beim Befestigungsvorgang durch Anziehen der Schraube 15 der Spannpratze 9 gelangt durch die Kraftkomponente $K_2$ die Seitenfläche 12 des Gehäuses 1 in Kontakt mit dem Vorsprung $V_2$ der Spannpratze 9, so daß die Spannpratze 9 zusätzlich ein Anschlagelement für das Gehäuse 1 darstellt.

Bei vollständig angezogener Schraube 15 übt der Vorsprung $V_2$ auf die Seitenfläche 12 des Gehäuses 1 eine Reaktionskraft R = $-K_2$ aus; durch diese Reaktionskraft R am Hebelarm a - a ist der senkrechte Abstand des Vorsprungs $V_2$ von der Montagefläche 10 - erfährt das Hohlprofil 1 ein Drehmoment R · a um eine in Längserstreckung des Gehäuses 1 verlaufende Drehachse in der der Spannpratze 9 zugewandten Seitenkante auf der Montagefläche 10, so daß das Hohlprofil 1 trotz des einseitigen seitlichen Eingreifens der Spannpratze 9 eine sichere ganzflächige Auflage auf der Montagefläche 10 erhält. Der Abstand a sowie der Abstand b des der Seitenfläche 12 abgewandten Vorsprungs $V_1$ von der Mittellinie M der Schraube 15 der Spannpratze 9 werden möglichst groß gewählt.

Die Durchlaßöffnung 17 in der Spannpratze 9 für die Schraube 15 weist ein genügendes Spiel für die Schraube 15 auf, so daß an die Genauigkeit der Lage der Gewindebohrung 16 in der Montagefläche 10 bezüglich des Hohlprofils 1 keine hohen Anforderungen gestellt werden müssen. Die Anzahl und der gegenseitige Abstand der Spannpratzen 9 über die Längserstreckung des Hohlprofils 1 können beliebig gewählt werden; insbesondere bei einem Hohlprofil 1 mit einer unebenen Auflagefläche 18 können die Spannpratzen 9 so angeordnet werden, daß die unebene Auflagefläche 18 einen ganzflächigen Kontakt mit der Montagefläche 10 erhält. Die Nut 13 braucht sich nicht über die gesamte Länge des Hohlprofils 1 zu erstrecken, sondern kann auch Partiell im Hohlprofil 1 ausgebildet sein.

Der im Inneren des Gehäuses 1 mittels einer Klebeschicht 2 befestigte Maßstab 3 weist bei Temperaturänderungen etwa in seiner Mitte einen Fixpunkt gegenüber dem Gehäuse 1 auf, da thermische Längenänderungen des Maßstabes 3 symetrisch zu seiner Mitte nach beiden Seiten hin erfolgen. In Weiterbildung der Erfindung wird vorgeschlagen, bei diesem Fixpunkt des Maßstabs 3 bezüglich des Gehäuses 1 eine Spannpratze 9 anzuordnen, deren Andruckkraft so bemessen ist, daß das Gehäuse 1 an dieser Stelle ebenfalls eine Fixpunkt bezüglich des zu messenden Objekts 11 besitzt. Die Andruckkraft weiterer Spannpratzen 9 wird so eingestellt, daß thermische Längenänderungen des Gehäuses 1 symmetrisch zum Fixpunkt des Gehäuses 1 möglich sind, so daß Meßungenauigkeiten infolge von Temperaturänderungen weitgehend vermieden werden.

Bei diesem Fixpunkt des Maßstabs 3 und des Gehäuses 1 kann die Spannpratze 9 auch formschlüssig in Meßrichtung mit dem Gehäuse 1 verbunden sein. Diese formschlüssige Verbindung kann beispielsweise mittels Paßstifte 20, 21 in Bohrungen 22, 23 erfolgen, die die Spannpratze 9 jeweils mit dem Gehäuse 1 und dem zu messenden Objekt 11 verbinden; die Bohrungen 22, 23 für die Paßstifte 20, 21 werden bevorzugt im befestigten Zustand der Spannpratze 9 hergestellt. Auf diese Art kann ein Gehäuse auch an einem Ende am zu messenden Objekt fixiert werden, wenn der Maßstab seinen Fixpunkt an diesem Ende des Gehäuses besitzt. Des weiteren kann der Fixpunkt des Gehäuses auch durch ein gesondertes Befestigungselement beliebiger Art festgelegt werden.

In nicht dargestellter Weise kann das Gehäuse auch eine Gegen die Montagefläche in Richtung auf die Spannpratze hin geneigte seitliche Fläche aufweisen, so daß das Gehäuse bei der Befestigung von der Spannpratze fort gegen einen gegenüberliegenden seitlichen Anschlag gedrückt wird. Die Spannpratze kann eine korrespondierende geneigte Fläche zur Kontaktierung der geneigten Fläche des Gehäuses besitzen.

**Patentansprüche**

1. Längenmeßeinrichtung, insbesondere gekapselter Bauart, zum Messen oder Einstellen der Relativlage zweier Objekte, bei der ein Träger für eine Maßverkörperung an einer Montagefläche eines der zu messenden Objekte auf einer Seite durch wenigstens eine Spannpratze befestigt ist, dadurch gekennzeichnet, daß zur Zerlegung der Andruckkraft K der Spannpratze (9) für den Träger (1) an die Montagefläche (10) in zwei zueinander senkrechte Kraftkomponenten $K_1$, $K_2$ in einer zur Längserstreckung des Trägers (1) senkrechten Ebene der Träger (1) und/oder die Spannpratze (9) zur gegenseitigen Kontaktierung eine gegen die Montagefläche (10) geneigte Fläche (14) aufweisen und daß der Träger (1) gegen einen seitlichen Anschlag ($V_2$) andrückbar ist.

2. Meßeinrichtung nach Anspruch 1, dadurch gekennzeichnet, daß die Spannpratze (9) in eine seitiche Nut (13) des Trägers (1) eingreift, daß die der Montagefläche (10) benachbarte Innenfläche (14) der Nut (13) zur Kontaktierung der Spannpratze (9) um einen der Spannpratze (9) abgewandten Winkel α gegen die Montagefläche (10) des zu messenden Objekts (11) geneigt ist und daß die Spannpratze (9) den Anschlag ($V_2$) für den Träger (1) bildet.

3. Meßeinrichtung nach den Ansprüchen 1 und 2, dadurch gekennzeichnet, daß die Spannpratze (9) sich auf der Montagefläche (10), auf der Innenfläche (14) der Nut (13) und auf einer die Nut (13) aufweisenden, zur Montagefläche (10) senkrechten Seitenfläche (12) des Trägers (1) abstützt.

4. Meßeinrichtung nach Anspruch 2, dadurch gekennzeichnet, daß der Winkel $\alpha$ in einem Bereich $0 < \alpha < 90°$ liegt.

5. Meßeinrichtung nach Anspruch 3, dadurch gekennzeichnet, daß die Spannpratze (9) zur Abstützung auf der Montagefläche (10) und auf der Innenfläche (14) der Mut (13) jeweils einen Vorsprung ($V_1$, $V_3$) und zur Abstützung auf der Seitenfläche (12) den Vorsprung ($V_2$) aufweist.

6. Meßeinrichtung nach Anspruch 1, dadurch gekennzeichnet, daß zur Fixierung des Trägers (1) wenigstens eine Spannpratze (9) formschlüssig mit dem Träger (1) und dem zu messenden Objekt (11) verbunden ist.

7. Meßeinrichtung nach Anspruch 6, dadurch gekennzeichnet, daß die formschlüssige Fixierung jeweils durch wenigstens einen Paßstift (20, 21) erfolgt.

## Claims

1. Distance measuring device, in particular of encapsulated form, for measuring or adjusting the relative position of two objects, in which a support for a measuring entity is fixed on a mounting surface of one of the objects to be measured on one side by at least one clamping claw, characterised in that, for resolving the applied force K of the clamping claw (9) for the support (1) on the mounting surface (10) into two mutually perpendicular force components $K_1$, $K_2$ in a plane perpendicular to the longitudinal extent of the support (1), the support (1) and/or the clamping claw (9) comprise a surface (14) for their mutual contact, inclined to the mounting surface (10), and in that the support (1) is adapted to press against a lateral abutment ($V_2$).

2. Measuring device according to claim 1, characterised in that the clamping claw (9) engages in a lateral groove (13) of the support (1), in that the inner surface (14) of the groove (13) adjacent to the mounting surface (10) for contacting the clamping claw (9) is inclined relative to the mounting surface (10) of the object (11) to be measured through an angle a facing the clamping claw (9), and in that the clamping claw (9) forms the abutment ($V_2$) for the support (1).

3. Measuring device according to claims 1 and 2, characterised in that the clamping claw (9) abuts against the mounting surface (10), against the inner surface (14) of the groove (13) and against a side surface (12) of the support (1) containing the groove (13) and perpendicular to the mounting surface (10)

4. Measuring device according to claim 2, characterised in that the angle $\alpha$ lies in a range $0 < \alpha < 90°$.

5. Measuring device according to claim 3, characterised in that the clamping claw (9) comprises a projection ($V_1$, $V_3$) for abutment against each of the mounting surface (10) and the inner surface (14) of the groove (13), and the projection ($V_2$) for abutment against the side surface (12).

6. Measuring device according to claim 1, characterised in that, for fixing the support (1), at least one clamping claw (9) is connected in interlocking manner with the support (1) and the object (11) to be measured.

7. Measuring device according to claim 6, characterised in that the interlocking fixing arises in each case from at least one dowel pin (20, 21).

## Revendications

1. Dispositif de mesure de longueurs, notamment de type blinde, destiné à mesurer ou régler la position relative de deux objets, un support pour une échelle de mesure étant fixe sur un côté par au moins une griffe de serrage sur une surface de montage d'un des objets à mesurer, caractérisé en ce que pour la décomposition de la force de pression K de la griffe de serrage (9) pour le support (1) contre la surface de montage (10) en deux composantes de force $K_1$, $K_2$ perpendiculaires l'une par rapport à l'autre dans un plan perpendiculaire par rapport à la longueur du support (1), le support (1) et/ou la griffe de serrage (9) comportent pour leur contact mutuel une surface (14) inclinée par rapport à la surface de montage (10) et que le support (1) peut être pressé contre une butée ($V_2$) latérale.

2. Dispositif de mesure selon la revendication 1, caractérisé en ce que la griffe de serrage (9) vient en prise dans une rainure (13) latérale du support (1), que la face intérieure (14) de la rainure (13), voisine de la surface de montage (10), est inclinée, pour l'entrée en contact avec la griffe de serrage (9), d'un angle $\alpha$ en opposition à la griffe de serrage (9), par rapport à la surface de montage (10) de l'objet à mesurer (11), et que la griffe de serrage (9) forme la butée ($V_2$) pour le support (1)

3. Dispositif de mesure selon la revendication 1 ou 2, caractérisé en ce que la griffe de serrage (9) porte contre la surface de montage (10), contre la face intérieure (14) de la rainure (13) et contre une face latérale (12) du support (1) qui est perpendiculaire à la surface de montage (10) et comporte la rainure (13).

4. Dispositif de mesure selon la revendication 2, caractérisé en ce que l'angle $\alpha$ se trouve dans une plage $0 < \alpha < 90°$.

5. Dispositif de mesure selon la revendication 3, caractérisé en ce que la griffe de serrage (9) comporte des saillies ($V_1$, $V_3$) pour l'appui sur la surface de montage (10) et sur la surface intérieure (14) de la rainure (13) et une saillie (V₂) pour l'appui sur la face latérale (12).

6. Dispositif de mesure selon la revendication 1, caractérisé en ce que pour la fixation du support (1), au moins une griffe de serrage (9) est reliée par complémentarité de forme au support (1) et à l'objet à mesurer (11).

7. Dispositif de mesure selon la revendication 6, caractérisé en ce que la fixation par complémentarité de forme est effectuée par au moins une goupille d'ajustage (20, 21).

FIG. 1a

FIG. 1b

0114972

FIG. 2 (Schnitt : A-B)